# EUROPEAN PATENT APPLICATION

(11) **EP 4 507 277 A1**
(43) Date of publication of application: **12.02.2025**
(21) Application number: 23869971.4
(22) Date of filing: 01.08.2023
(51) Int. Cl.: H04L 67/131, H04W 72/12, H04W 76/28

(54) **DATA TRANSMISSION METHOD AND APPARATUS, COMPUTER-READABLE MEDIUM, AND ELECTRONIC DEVICE**

(30) Priority: 30.09.2022 CN 202211230444
(71) Applicant: Tencent Technology (Shenzhen) Company Limited, Shenzhen, Guangdong 518057 (CN)
(72) Inventor: LEI, Yixue, Shenzhen, Guangdong 518057 (CN)
(74) Representative: AWA Sweden AB
(86) International application number: PCT/CN2023/110452
(87) International publication number: WO 2024/066725

(57) **Abstract**

Embodiments of the present application provide a data transmission method and apparatus, a computer-readable medium, and an electronic device. The data transmission method comprises: receiving network state information of a wireless access network side reported by an access network element; receiving characteristics, sent by a core network element, of network transmission between the access network element and a core network gateway; detecting characteristics of network transmission between an application server and the core network gateway; and according to the network state information of the wireless access network side, the characteristics of network transmission between the access network element and the core network gateway, and the characteristics of network transmission between the application server and the core network gateway, adjusting parameters of a service data packet to be transmitted.

## Description

### RELATED APPLICATION

This application claims priority to Chinese Patent Application No. 202211230444.5, entitled "DATA TRANSMISSION METHOD AND APPARATUS, COMPUTER-READABLE MEDIUM, AND ELECTRONIC DEVICE" and filed on September 30, 2022.

### FIELD OF THE TECHNOLOGY

The disclosure relates to the field of computer and communication technologies, and in particular, to a data transmission method and apparatus, a computer-readable medium, and an electronic device.

### BACKGROUND OF THE DISCLOSURE

In 5G and evolved 5G systems, high-bandwidth interactive services are important types of services, such as cloud gaming, virtual reality (VR), augmented reality (AR), mixed reality (MR), extended reality (XR), and cinematic reality (CR).

Data packets of such interactive services may have cycles when being transmitted. Taking advantage of the cycles, a wireless network may improve time-frequency resource usage efficiency by adopting a semi-persistent scheduling (SPS) or connected-discontinuous reception (C-DRX) mechanism. However, such mechanisms may not be able to satisfy a quality of service (QoS) condition.

### SUMMARY

Embodiments of the disclosure provide a data transmission method and apparatus, a computer-readable medium, and an electronic device, which can adjust a parameter of a service data packet to ensure that the parameter matches an end-to-end network transmission situation, thereby improving QoS and meeting a QoS condition.

According to a first aspect, some embodiments of the disclosure provides a data transmission method, including: receiving network status information on a radio access network side reported by an access network element; receiving a network transmission characteristic between the access network element and a core network gateway sent by a core network element; detecting a network transmission characteristic between an application server and the core network gateway; and adjusting a parameter of a service data packet to be transmitted based on the network status information, the network transmission characteristic between the access network element and the core network gateway, and the network transmission characteristic between the application server and the core network gateway.

According to a second aspect, some embodiments of the disclosure provides a data transmission method, including: receiving network status information on a radio access network side reported by an access network element; receiving a network transmission characteristic between the access network element and a core network gateway sent by a core network element; detecting a network transmission characteristic between an application server and the core network gateway; and adjusting a parameter of a service data packet to be transmitted based on at least one of the network status information on the radio access network side, the network transmission characteristic between the access network element and the core network gateway, or the network transmission characteristic between the application server and the core network gateway.

According to a third aspect, some embodiments of the disclosure provides a data transmission apparatus, including: a receiving unit, configured to receive network status information on a radio access network side reported by an access network element, and receive a network transmission characteristic between the access network element and a core network gateway sent by a core network element; a detection unit, configured to detect a network transmission characteristic between an application server and the core network gateway; and an adjustment unit, configured to adjust a parameter of a service data packet to be transmitted based on the network status information, the network transmission characteristic between the access network element and the core network gateway, and the network transmission characteristic between the application server and the core network gateway.

According to a fourth aspect, some embodiments of the disclosure provides a computer-readable medium, having a computer program stored herein, the computer program, when executed by a processor, implementing the data transmission method according to the foregoing embodiments.

According to a fifth aspect, some embodiments of the disclosure provides an electronic device, including: one or more processors; and a storage apparatus, configured to store one or more computer programs, the one or more computer programs, when executed by one or more programs, causing the electronic device to implement the data transmission method according to the foregoing embodiments.

According to a sixth aspect, some embodiments of the disclosure provides a computer program product, the computer program product including a computer program, the computer program being stored in a computer-readable storage medium. A processor of an electronic device reads the computer program from the computer-readable storage medium, and executes the computer program, so that the electronic device performs the data transmission method according to the foregoing embodiments.

According to the technical solutions provided in some embodiments of the disclosure, an application function receives the network status information on the radio access network side reported by the access network element and the network transmission characteristic between the access network element and the core network gateway sent by the core network element, and detects the network transmission characteristic between the application server and the core network gateway, to adjust the parameter of the to-be-transmitted service data packet based on the network status information on the radio access network side, the network transmission characteristic between the access network element and the core network gateway, and the network transmission characteristic between the application server and the core network gateway, so that the application layer (including an application function and/or an application server) can grasp a network transmission situation with the user equipment. In this way, the parameter of the service data packet may be adjusted to ensure that the parameter matches the network transmission situation, thereby improving QoS and meeting a QoS condition.

### BRIEF DESCRIPTION OF THE DRAWINGS

FIG. 1 is a schematic diagram of an exemplary system architecture to which a technical scheme according to some embodiments of the disclosure is applicable.
FIG. 2 is a schematic diagram of a transmission process of a multimedia data packet according to some embodiments of the disclosure.
FIG. 3 is a schematic diagram of a system architecture of a data transmission method according to some embodiments of the disclosure.
FIG. 4 is a schematic diagram of a comparison between delay jitter distributions in a transmission process of a service data packet according to some embodiments of the disclosure.
FIG. 5 is a flowchart of a data transmission method according to some embodiments of the disclosure.
FIG. 6 is a flowchart of a data transmission method according to some embodiments of the disclosure.
FIG. 7 is a flowchart of a data transmission method according to some embodiments of the disclosure.
FIG. 8 is an interaction flowchart of a data transmission method according to some embodiments of the disclosure.
FIG. 9 is a block diagram of a data transmission apparatus according to some embodiments of the disclosure.
FIG. 10 is a schematic structural diagram of a computer system adapted to implement an electronic device according to some embodiments of the disclosure.

### DESCRIPTION OF EMBODIMENTS

Exemplary implementations are described more comprehensively below with reference to the accompanying drawings. However, the examples of implementations can be implemented in various forms, and are not to be understood as being limited to these examples. Conversely, the implementations are provided to make the disclosure more comprehensive and complete, and comprehensively convey the idea of the examples of the implementations to a person skilled in the art.

In addition, the described features, structures, or characteristics in the disclosure may be combined in one or more embodiments in any appropriate manner. In the following descriptions, more details are provided to provide a comprehensive understanding of the embodiments of the disclosure. However, a person skilled in the art is to be aware that, the technical solutions in the disclosure may be implemented without using all detailed features in the embodiments, and one or more specific details may be omitted, or another method, element, apparatus, or operation may be used.

The block diagrams shown in the accompanying drawings are functional entities and do not necessarily correspond to physically independent entities. The functional entities may be implemented in the form of software, or implemented in one or more hardware modules or integrated circuits, or implemented in different networks and/or processor apparatuses and/or microcontroller apparatuses.

The flowcharts shown in the accompanying drawings are examples for descriptions. Content and operations/steps in the flowcharts are not always necessary, and are not necessarily performed in the described orders. For example, some operations/steps may be further divided, while some operations/steps may be combined or partially combined. An execution order may change according to an actual case.

"Plurality of' means two or more. And/or describes an association relationship for describing associated objects and represents that three relationships may exist. For example, A and/or B may represent the following three cases: Only A exists, both A and B exist, and only B exists. The character "/" may represent an "or" relationship between the associated objects.

With the development of a 5G-generation mobile communication technology (5G), many multimedia services that use large amounts of data and short delays are applied, for example, interactive services such as a cloud gaming service, VR, AR, MR, XR, and CR.

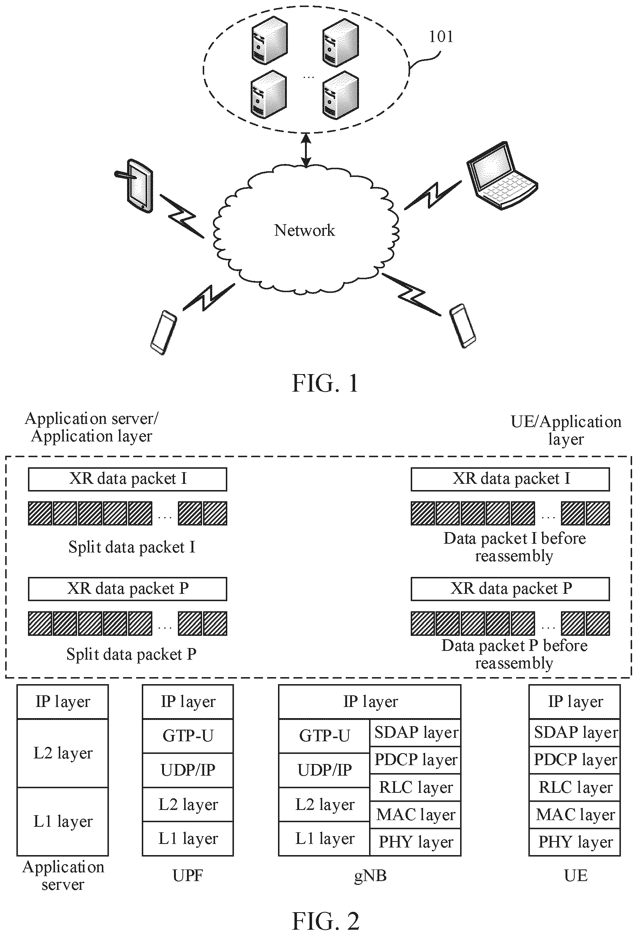

For example, in a cloud gaming scenario shown in FIG. 1, a cloud server 101 may be configured to run cloud gaming. The cloud server 101 may render a game picture, perform encoding processing on an audio signal and a rendered image, and finally transmit encoded data obtained through the encoding processing to each game client through a network. The game client may be user equipment, for example, a smartphone, a tablet computer, a notebook computer, a desktop computer, a smart television, a smart home, an in-vehicle terminal, or an aircraft, with a streaming media playback capability, a human-computer interaction capability, a communication capability, and the like. The game client may be an application running in a terminal device. The game client may decode the encoded data transmitted by the cloud server 101 to obtain a simulated audio and video signal, and play the simulated audio and video signal.

FIG. 1 is only an exemplary system architecture representing a cloud gaming system and does not limit an architecture of the cloud gaming system. For example, in some embodiments, the cloud gaming system may further include a back-end server for scheduling and the like. The cloud server 101 may be an independent physical server, or may be a server cluster or a distributed system formed by a plurality of physical servers, or may be a cloud server that provides a cloud computing service such as a cloud service, a cloud database, cloud computing, a cloud function, cloud storage, a network service, cloud communication, a middleware service, a domain name service, a security service, a content delivery network (CDN), big data, and an artificial intelligence platform. The game client and the cloud server 101 may be directly or indirectly connected in a wired or wireless communication manner. The disclosure is not limited thereto.

In the interactive service application scenario based on multimedia, because a multimedia data packet may be large, the multimedia data packet may be split into a plurality of data packets for transmission. As shown in FIG. 2, in a 5G system, a user plane may include an application server, a user plane function (UPF), a base station (next generation nodeB, gNB for short), and user equipment (UE). The transmission of the multimedia data packet is in a downlink direction for some service scenarios, for example, from the application server to the UPF, and the multimedia data packet may be sent to the UE through the gNB. During transmission, the multimedia data packet (where an XR data packet is used as an example in FIG. 2) is split at an application layer of the application server. Based on the split data packet reaching the UPF from the application server as an IP packet, the 5G system may transmit the sub-data packets to the UE through a protocol data unit (PDU) session. At the UE, the sub-data packets may be submitted step-by-step upward from a protocol stack and reassembled to recover the multimedia data packet.

In the system shown in FIG. 2, an L1 layer refers to a physical layer, which may ensure original data may be transmitted on various physical media. An L2 layer refers to a data link layer, which may be configured for providing a service to a network layer based on a service provided by the physical layer. An Internet protocol (IP) layer is a network layer and may be configured for implementing data transmission between two terminal systems. UDP is a user data protocol. GTP-U is a general packet radio service (GPRS) tunneling protocol-U. PHY is an abbreviation of Physical, which represents a physical layer. MAC is a Media Access Control (MAC). RLC is a radio link control (radio link control layer protocol). PDCP is a packet data convergence protocol. SDAP is a service data adaptation protocol.

As described above, for a multimedia service, such as an XR and Media Services (XRM) service, one frame of multimedia data packet may be divided into a plurality of data packets for transmission. A data packet formed by a single multimedia service frame or a group of packets (GoP) may also be large in bytes and may be carried by a series of Internet protocol (IP) data packets. There may be a correlation between these IP data packets, and processing these packets based on the correlation may save a wireless network bandwidth. Some XRM service flows are cyclical, for example, may be 60/90/120 frame per second (FPS) data packets. A generated video frame may generate data packets at a time interval of approximately 16.67 ms/11.11 ms/8.33 ms time intervals. The wireless network may improve time-frequency resource efficiency by using these cyclical characteristics. For example, based on cyclicity of the XRM service, a semi-persistent scheduling (SPS) or connected-discontinuous reception (C-DRX) mechanism is adopted. However, the premise for using this method is that the 5G system has learned that the XRM service flow is cyclical.

In some embodiments of the disclosure, C-DRX is a connected-discontinuous reception mode. The UE may be allowed to cyclically enter a sleep state without detecting a physical downlink control channel (PDCCH). Based on detection to be used, the UE may wake up from the sleep state and power may be saved.

In some embodiments, an application function (AF)/application server (AS) may directly provide cycle information and a delay jitter distribution characteristic of the service flow to a 5G system (5GS). Based on the data packet reaching the base station for wireless network scheduling transmission, the base station may configure C-DRX based on the cyclicity and the delay jitter distribution characteristic of the data packet. However, the base station may not be able to directly learn whether and how a configured C-DRX parameter may satisfy the QoS condition of the application layer. If the AF/AS may not adjust a service flow characteristic of the application layer in time, there may be a situation where the QoS may not be ensured even if the C-DRX configuration is adjusted on the wireless side. For example, the AF/AS has data reaching during C-DRX off (Opportunity for DRX, for example, a sleep period), so that the AF/AS goes from C-DRX off to C-DRX on (On Duration, for example, an activation state) in advance, which causes the C-DRX to fail. Even if the C-DRX off time is not reduced, data other than cyclicity may be delayed or increased due to the DRX configuration, which also affects implementation of application layer QoS guarantee.

In some embodiments of the disclosure, a radio access network (RAN) side (including the gNB and/or the UE) may report a network status parameter of the radio access network side to the AF/AS. A core network side may associate network transmission characteristics per-UE and send the associated network transmission characteristics to the AF/AS. In addition, the AF/AS may measure and predict a link characteristic between the AF/AS and the UPF, so that an end-to-end network transmission characteristic from the AF to the UE is grasped. Parameters that affect the rate such as the frame rate and the resolution of the service data packet may be adjusted to implement flexible adaptation of the service data packet and the network status, which may optimize the QoS.

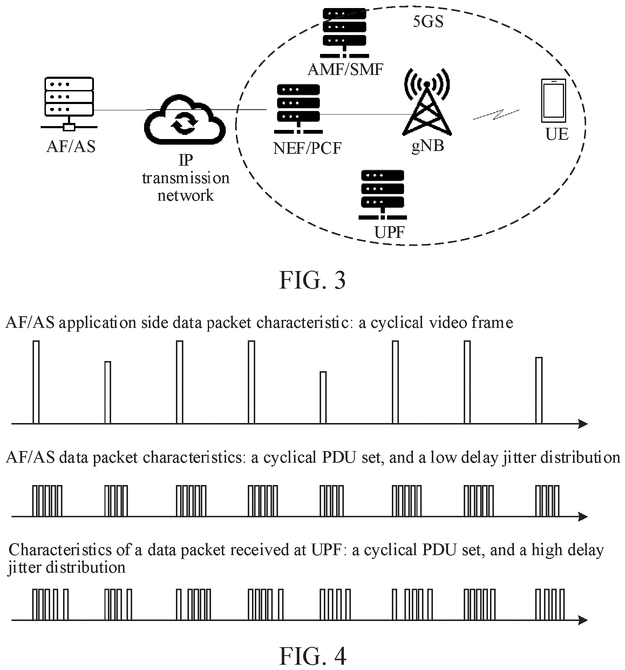

As shown in FIG. 3, the AF/AS may implement a control plane function of a third-party application server and interact through an AF-network exposure function (AF-NEF) or an AF-policy control function (AF-PCF). The AF/AS may also implement a user plane function of the third-party application server, for example, through an AS-IP transmission network-UPF interface. In the system architecture shown in FIG. 3, a 5GS gateway may include a UPF, or may include an entity, for example, an NEF, a PCF, or a router/switch node deployed between the 5GS and an external network, responsible for capability exposure on a control plane.

In some embodiments of the disclosure, an IP transmission network may be implemented in a wired manner or a wireless manner. For example, the IP transmission network may be a metropolitan area network, an access network, or a wide area network based on an optical network, which depends on a topological relationship between a 5G core network (5GC) boundary and the third-party application server. Because the 5G network adopts a network architecture that may be conducive to UPF sinking, if the AF/AS is located at an edge and the UPF also sinks to the edge, a topological distance between the 5GC boundary (for example, the UPF at the edge) and the AF/AS may be shortened. However, the AF/AS may be located in a central cloud. UPF sinking may not resolve this problem. An impact of the IP transmission network between the third-party server and a 5GC boundary (for example, a UPF) on service flow transmission may not be ignored.

As shown in FIG. 4, an AF/AS application side data packet characteristic may be, for example, a cyclical video frame. The cyclical video frame is split into a plurality of IP data packets for transmission. The plurality of IP data packets may form a PDU set. A delay jitter distribution of the IP data packet may be smaller. Because these IP data packets may be transmitted between a third-party server AS and a 5GS gateway, based on the IP data packets reaching the UPF, the delay jitter distribution of these IP data packets may become larger. As shown in FIG. 4, a delay between IP data packets within a PDU set becomes larger, resulting in a longer reception time for a PDU set. In some embodiments of the disclosure, the AF/AS may measure and predict a link characteristic between the AF/AS and the UPF, to grasp an end-to-end network transmission characteristic from the AF to the UE.

In addition, the AF/AS, as a third-party application provider, is also a generation (downstream multimedia data in a case of cloud rendering) or forwarding node of a data packet of a multimedia service such as XR. The AF/AS may adjust parameters such as resolution and a frame rate of a data packet of a multimedia service such as XR based on the end-to-end network transmission characteristic from the AF to the UE, so that transmission of the service data packet at the application layer may match the end-to-end network transmission situation, which may improve QoS and may satisfy the QoS condition.

Implementation details of the technical solutions of the embodiments of the disclosure are described below in detail.

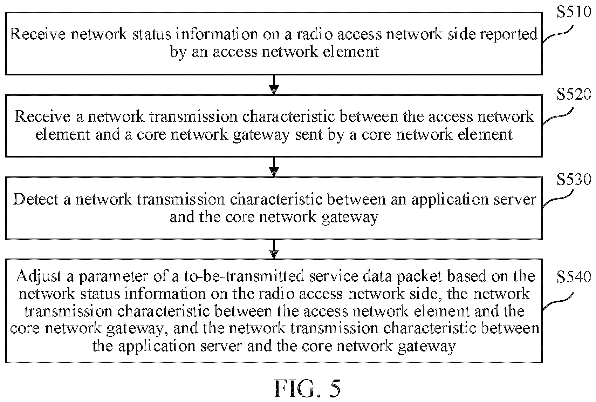

FIG. 5 is a flowchart of a data transmission method according to some embodiments of the disclosure. The data transmission method may be performed by an application layer network element, and for example, may be performed by an AF. Referring to FIG. 5, the data transmission method may include S510 to S540, which are described in detail as follows.

Operation S510: Receive network status information on a radio access network side reported by an access network element.

In some exemplary embodiments, the network status information on the radio access network side reported by the access network element may include network status information reported by a base station and network status information reported by UE.

The network status information on the radio access network side includes at least one of the following: a scheduling transmission policy adopted for a cyclical service data packet, an application layer service condition of user equipment, or a network status in a serving cell in which the user equipment is located.

In some exemplary embodiments, the scheduling transmission policy adopted for the cyclical service data packet may include a C-DRX configuration parameter or an SPS configuration parameter. The C-DRX configuration parameter includes at least one of the following: a C-DRX cycle or activation duration (for example, On Duration duration) and sleep duration (for example, Opportunity for DRX duration) included in a single C-DRX cycle.

In some exemplary embodiments, the application layer service condition of the user equipment includes at least one of the following: information about an application running on the user equipment that may be sensed by an application server (for example, the AF and/or the AS), or information about an application running on the user equipment that does not need to be sensed by the application server. In some embodiments, the reason why the user equipment may report information about the applications that are not to be sensed by the application server side is that although these applications may not be sensed by the application server side, if these applications generate traffic, effectiveness of the C-DRX configuration may be affected. Information about the application that may not be sensed by the application server side may also be reported to the application layer, so that the application layer may perform rate adjustment and adaptation for all applications on the UE, may ensure the effectiveness of the C-DRX configuration and may satisfy the QoS condition.

In some exemplary embodiments, the network status of the serving cell in which the user equipment is located includes at least one of the following: a radio link status in the serving cell, occupation of a time-frequency resource in the serving cell, or load information of the serving cell.

The radio link status in the serving cell may be measured by parameters such as a signal to interference plus noise ratio (SINR), reference signal receiving power (RSRP), a reference signal receiving quality (RSRQ), and a received signal strength indication (RSSI). The occupation of the time-frequency resource in the serving cell may be configured for indicating a resource congestion state of the serving cell.

The load information of the serving cell may be measured based on all physical resource blocks (PRBs) of the serving cell and a number of the remaining available PRBs. For example, if a proportion of the remaining available PRBs is relatively low (for example, less than 1/3), it represents that the load of the serving cell is relatively high. Reversely, if the proportion of the remaining available PRBs is relatively high (for example, greater than 2/3), it represents that the load of the serving cell is relatively low.

Operation S520: Receive a network transmission characteristic between the access network element and a core network gateway sent by a core network element.

In some exemplary embodiments, the network transmission characteristic between the access network element and the core network gateway sent by the core network element may be determined for each user equipment, for example, Per-UE. The core network element may determine a network transmission characteristic between a base station device and a user plane function for each user equipment based on a transmission link between the base station device and the user plane function, a transmission link between a plurality of user plane functions for data forwarding, and a protocol data unit (PDU) session and a quality of service flow established for each user equipment.

The access network element may be the base station, and the core network gateway may be the UPF. According to an architecture of the 5G system, based on a service data packet generated by the AS being sent, the service data packet generated by the AS may be transmitted to an access network through UPF-gNB, or may be transmitted to an access network through PDU session anchor (PSA) UPF-Initial-UPF (I-UPF)-gNB. An interface between the UPF and the gNB is an N3 interface, and an interface between the UPF and the UPF is an N9 interface.

The core network element may determine the network transmission characteristic between the base station device and the user plane function for each user equipment based on a transmission link (for example, an N3 interface link) between the gNB and the UPF, the transmission link (for example, an N9 interface link) between a plurality of user plane functions for data forwarding, and a unit (PDU) session and a quality of service flow (for example, a QoS flow) established for each user equipment.

Still referring to FIG. 5. Operation S530: Detect a network transmission characteristic between an application server and the core network gateway.

The core network gateway is a border device of a core network, for example, may be the UPF, and may be configured for acting as an entry point or an exit point.

In some exemplary embodiments, a process of detecting the network transmission characteristic between the application server and the core network gateway may be that: dynamically detect the transmission link between the application server and the core network gateway. Based on a dynamic detection result of the transmission link, a transmission bandwidth and a delay change of the transmission link are determined. The transmission bandwidth and the delay change are the network transmission characteristic between the application server and the core network gateway.

In some exemplary embodiments, a process of detecting the network transmission characteristic between the application server and the core network gateway may be that: determine the network transmission characteristic between the application server and the core network gateway based on a service level agreement (SLA) between the application server and the core network. Some embodiments enable that based on the transmission link between the AF/AS and the core network having an SLA, the network transmission characteristic between the application server and the core network gateway may be determined based on the SLA.

In some exemplary embodiments, before the network transmission characteristic between the application server and the core network gateway is determined based on the service level agreement SLA between the application server and the core network, whether the SLA has an impact on the delay jitter distribution characteristic of the service data packet may be further evaluated first based on the SLA between the application server and the core network. If the SLA has an impact on the delay jitter distribution characteristic of the service data packet, the network transmission characteristic between the application server and the core network gateway is determined based on the service level agreement SLA between the application server and the core network. If the SLA has no impact on the delay jitter distribution characteristic of the service data packet, the transmission link between the application server and the core network gateway may be dynamically detected, and the network transmission characteristic between the application server and the core network gateway may be determined based on the dynamic detection result of the transmission link.

In some exemplary embodiments, a process of detecting the network transmission characteristic between the application server and the core network gateway may be that: According to the service level agreement (SLA) between the application server and the core network, the transmission link between the application server and the core network gateway is dynamically detected to obtain the transmission bandwidth and the delay change of the transmission link. In this embodiment, although the SLA stipulates a service level between the application server and the core network, an actual network status may be better than the SLA agreement. The SLA may be used as a reference to implement more targeted network transmission characteristic detection based on the SLA to improve accuracy of network transmission characteristic detection.

In some exemplary embodiments, the network transmission characteristic between the application server and the core network gateway may include: an impact of the transmission link between the application server and the core network gateway on cycle information and a delay jitter distribution characteristic of the transmitted service data packet.

Operation S540: Adjust a parameter of a to-be-transmitted service data packet based on the network status information on the radio access network side, the network transmission characteristic between the access network element and the core network gateway, and the network transmission characteristic between the application server and the core network gateway.

In some exemplary embodiments, the parameter of the to-be-transmitted service data packet includes at least one of the following: a frame rate of the service data packet, resolution of the service data packet, or a cycle of the service data packet.

Adjusting the parameter of the to-be-transmitted service data packet may be that: adjust the cycle of the to-be-transmitted service data packet to an integer multiple of a C-DRX cycle to ensure that the cycle of the service data packet matches the C-DRX cycle, and may ensure the effectiveness of the C-DRX.

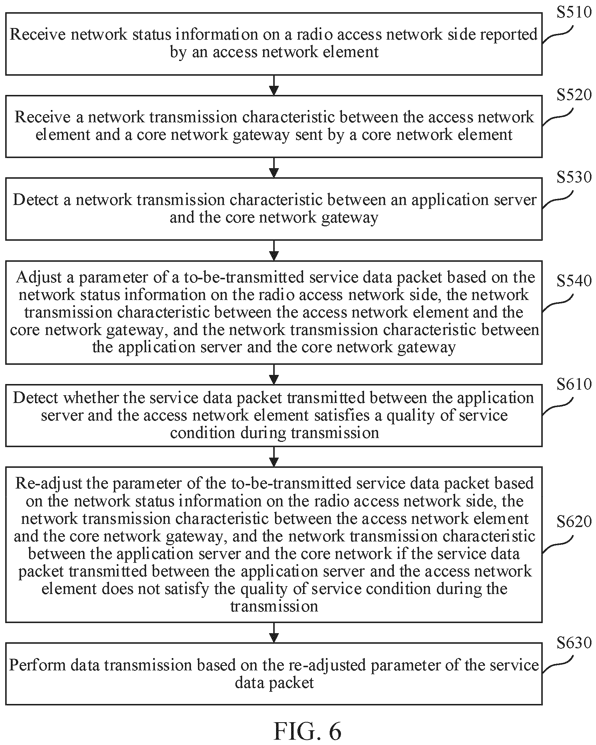

FIG. 6 is a flowchart of a data transmission method according to some embodiments of the disclosure. Based on S510 to S540 shown in FIG. 5, the data transmission method may further include the following operations.

Steps S610: Detect whether the service data packet transmitted between the application server and the access network element satisfies a quality of service condition during transmission.

Detecting whether the service data packet transmitted between the application server and the access network element satisfies the quality of service condition during transmission may be that: detect whether the service data packet transmitted between the application server and the UE satisfies the quality of service condition during transmission, for example, detect whether the end-to-end data transmission satisfies the quality of service condition.

The access network element (for example, the base station) may detect whether the service data packet transmitted between the application server and the access network element satisfies the quality of service condition during transmission. If the quality of service condition is not satisfied, indication information may be sent to the application function. The application function may further actively detect whether the service data packet satisfies the quality of service condition during transmission by collecting a transmission feedback parameter and a network characteristic of the service data packet.

Operation S620: Re-adjust the parameter of the to-be-transmitted service data packet based on the network status information on the radio access network side, the network transmission characteristic between the access network element and the core network gateway, and the network transmission characteristic between the application server and the core network gateway if the service data packet transmitted between the application server and the access network element does not satisfy the quality of service condition during the transmission.

A process of re-adjusting the parameter of the to-be-transmitted service data packet based on the network status information on the radio access network side, the network transmission characteristic between the access network element and the core network gateway, and the network transmission characteristic between the application server and the core network gateway may be repeated for a plurality of times. Until the parameter of the to-be-transmitted service data packet is re-adjusted and the service data packet transmitted between the application server and the access network element satisfies the quality of service condition during transmission.

Operation S630: Perform data transmission based on the re-adjusted parameter of the service data packet.

According to some embodiments shown in FIG. 5 and FIG. 6, the application layer (including the application function and/or the application server) may grasp the network transmission situation with the user equipment. The parameter of the service data packet may be adjusted to ensure that the parameter of the service data packet matches the network transmission situation, which may be conducive to improving the QoS and satisfying the QoS condition.

In some embodiments, the application layer adjusts the parameter of the to-be-transmitted service data packet based on the network status information on the radio access network side, the network transmission characteristic between the access network element and the core network gateway, and the network transmission characteristic between the application server and the core network gateway. In some embodiments of the disclosure, the application layer may adjust the parameter of the to-be-transmitted service data packet by using one or two of the network status information on the radio access network side, the network transmission characteristic between the access network element and the core network gateway, and the network transmission characteristic between the application server and the core network gateway. For example, the parameter of the to-be-transmitted service data packet may be adjusted only based on the network status information on the radio access network side.

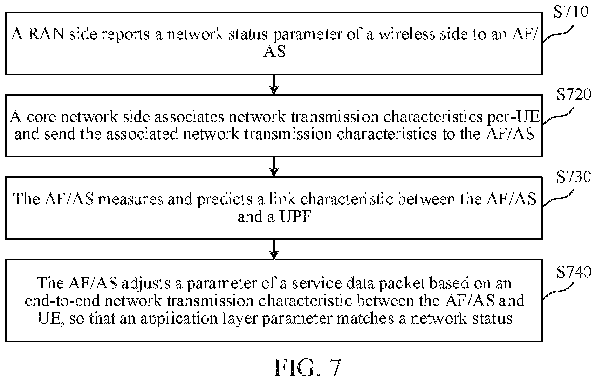

The implementation details of some embodiments of the disclosure are described below with reference to FIG. 7 to FIG. 8.

FIG. 7 is a flowchart of a data transmission method according to some embodiments of the disclosure. The method may include the following operations.

S710: A RAN side reports a network status parameter of a wireless side to an AF/AS.

In some exemplary embodiments, a parameter reported on the RAN side include but is not limited to: a C-DRX cyclical configuration parameter; an application layer service condition of UE; and a radio link status, a cell resource congestion state, and the like of the UE in a current cell.

The C-DRX cyclical configuration parameter includes a C-DRX cycle, C-DRX on (for example, On Duration, activation duration) and off (for example, Opportunity for DRX, sleep duration) duration, and the like.

The C-DRX cyclical configuration parameter may have a constraint based on the cycle being set and may not be flexibly adjusted. The application layer may be more flexible in adjusting the granularity of the frame rate, the cycle, and the like. An advantage of reporting the C-DRX cyclical configuration parameter to the AF/AS is that based on receiving the C-DRX cyclical configuration parameter, the AF/AS may adapt to the C-DRX cycle by adjusting the frame rate, the cycle, and the like of the application layer. A principle of adaptation is that a cycle of an application layer frame is an integer multiple of the C-DRX cycle.

The application layer service condition of the UE may be whether the application installed on the UE uses AF/AS awareness or may not use AF/AS awareness. If the application uses AF/AS awareness, the application may be aware by the AF/AS (for example, an application server side); or if the application may not use AF/AS awareness, the application may not use the AF/AS (for example, an application server side) to be aware of these applications.

Some applications on the UE use AF/AS awareness, and some may not use AF/AS awareness. Applications that may not need AF/AS awareness may affect the effectiveness of the C-DRX configuration if traffic is generated. For a situation where the AF/AS is to adjust the rate to adapt to the C-DRX, the UE may report all application information to the AF/AS.

Based on the application information of the UE being reported to the AF/AS, the AF/AS may perform rate adjustment and adaptation on a multimedia service data packet such as XR for all application information reported by the UE. In other words, the AF/AS has the right to send and receive control over all applications on the UE, which may ensure the effectiveness of the C-DRX configuration.

The radio link status of the UE in the current cell may be represented by a parameter such as SINR, RSRP, RSRQ, and RSSI of the serving cell in which the UE is currently located. The information reported by the UE may further include a cell load (for example, a cell load), where the cell load may be measured by all PRBs and a number of the remaining available PRBs.

S720: A core network side associates network transmission characteristics per- UE and send the associated network transmission characteristics to the AF/AS.

Based on the service data packet generated by the AS being sent, the service data packet may be transmitted to the access network through UPF-gNB, or the service data packet may be transmitted to the access network through PSA UPF-I-UPF-gNB. An interface between the UPF and the gNB is an N3 interface, and an interface between the UPF and the UPF is an N9 interface. Therefore, the core network may detect a characteristic of an N3 interface link between the gNB and the UPF and a characteristic of an N9 interface link between UPFs, and combine the characteristics with the per-UE PDU session and QoS flow established by each UE to analyze and collect statistics on the network transmission characteristic of the N3 interface link the network transmission characteristic of the N9 interface link.

In some embodiments of the disclosure, the network transmission characteristic refers to an impact of network transmission on the cyclicity and the delay jitter distribution characteristic of the service flow generated by the AF/AS. The cyclical service flow generated by the AF/AS may be sent in a burst mode. After reaching the UPF from the AF/AS, whether the cyclical service flow is affected in the UPF-gNB or PSA UPF-I-UPF-gNB transmission process may be determined. An ideal N3 interface link or N3+N9 interface link may have less impact on the cyclicity or the delay jitter distribution of the service flow. If the impact on the delay jitter distribution of the service flow is small, the data packet reaching the gNB may be maintained in a relatively concentrated burst mode. A size of these bursts has a direct impact on configuring the on (activation duration) duration of the C-DRX.

S730: The AF/AS measures and predicts a link characteristic between the AF/AS and a UPF.

In some exemplary embodiments, the AF/AS detects a link between the AF/AS and the UPF to obtain a network transmission characteristic. The network transmission characteristic refers to an impact of network transmission on the cyclicity and the delay jitter distribution characteristic of the service flow generated by the AF/AS. For example, the cyclical service flow generated by the AF/AS is sent in a burst mode, which may be affected based on being transmitted from the AF/AS to the UPF. An ideal AF/AS-UPF transmission link may have less impact on the cyclicity or the delay jitter distribution of the service flow. If the impact on the delay jitter distribution of the service flow is small, the data packet reaching the UPF may be maintained in a relatively concentrated burst mode. Based on the transmission link between the UPF and the gNB being strong, the cyclicity and the burst mode of the service flow may be maintained.

S740: The AF/AS adjusts a parameter of a service data packet based on an end-to-end network transmission characteristic between the AF/AS and UE, so that an application layer parameter matches a network status.

Based on the AF/AS measuring and predicting the link characteristic between the AF/AS and the UPF, combined with data sent from the RAN side and the core network side, the end-to-end network transmission characteristic from the AF to the UE may be grasped, and the application layer parameter may be adjusted based on the C-DRX and the radio link configuration, so that adjustment and adaptation of the application layer may be consistent with the network side, which may optimize the QoS.

In the embodiments of the disclosure, an execution order from S710 to S730 shown in FIG. 7 is not limited. In implementation, operations may be executed in the order shown in FIG. 7, or may be executed simultaneously, or the execution order may be arbitrarily changed.

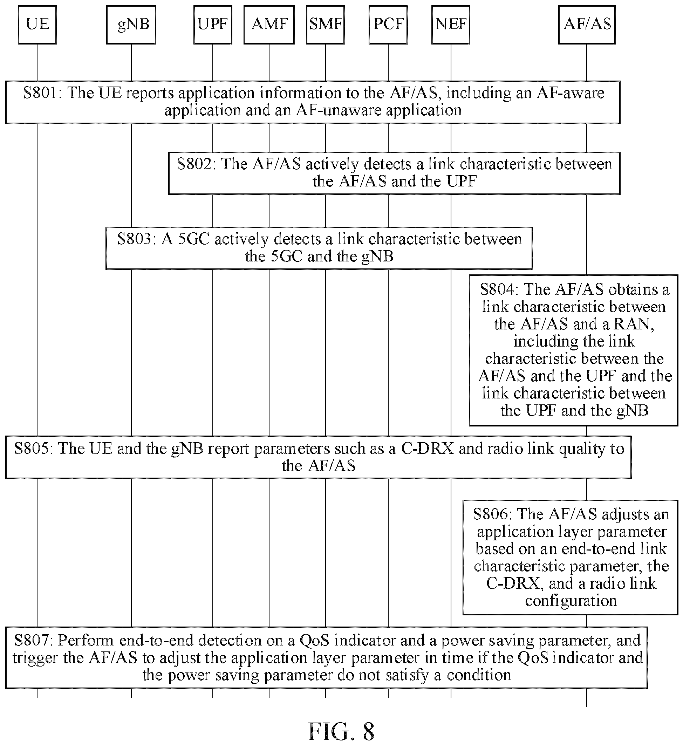

An interactive process of the technical scheme shown in FIG. 7 is shown in FIG. 8, including the following operations.

S801: UE reports application information to an AF/AS, including an application that is to be sensed by the AF/AS and an application that is not to be sensed by the AF/AS.

Because traffic generated by the application that does not use AF/AS awareness may still affect the effectiveness of the C-DRX configuration, in a situation where the AF/AS is to adjust the rate to match the C-DRX, the UE may report all application information to the AF/AS. Based on the application information of the UE being reported to the AF/AS, the AF/AS may perform rate adjustment and adaptation on a multimedia service data packet such as XR for all application information reported by the UE. In other words, the AF/AS may have the right to send and receive control over all applications on the UE, which may ensure the effectiveness of the C-DRX configuration.

S802: The AF/AS actively detects a link characteristic between the AF/AS and a UPF.

That the AF/AS actively detects a link characteristic between the AF/AS and a UPF may include: dynamically detecting the transmission link between the AF/AS and the UPF, determining a transmission bandwidth and a delay change of the transmission link based on a dynamic detection result of the transmission link, and using the transmission bandwidth and the delay changes as the link characteristic between the AF/AS and the UPF.

S803: A 5GC actively detects a link characteristic between the 5GC and a gNB.

The 5GC actively detects the link characteristic between the 5GC and the gNB by detecting the link characteristic between the UPF and the gNB. As described above, based on the service data packet generated by the AS being sent, the service data packet may be transmitted to the access network through UPF-gNB, or the service data packet may be transmitted to the access network through PSA UPF-I-UPF-gNB. An interface between the UPF and the gNB is an N3 interface, and an interface between the UPF and the UPF is an N9 interface. The 5GC network element may detect the characteristic of the N3 interface link between the gNB and the UPF and the characteristic of the N9 interface link between UPFs, and may also combine the characteristics with the per-UE PDU session and QoS flow established by each UE to analyze and collect statistics on the network transmission characteristic of the N3 interface link the network transmission characteristic of the N9 interface link.

S804: The AF/AS obtains a link characteristic between the AF/AS and a RAN, including the link characteristic between the AF/AS and the UPF and the link characteristic between the UPF and the gNB.

S805: The UE and the gNB report parameters such as a C-DRX and radio link quality to the AF/AS.

The C-DRX cyclical configuration parameter reported by the gNB includes the C-DRX cycle, on and off duration, and the like.

Parameters such as the radio link quality reported by the UE may be represented by parameters such as SINR, RSRP, RSRQ and RSSI of the serving cell in which the UE is currently located. The information reported by the UE may further include a cell load, where the cell load may be measured by all PRBs and a number of the remaining available PRBs.

S806: The AF/AS adjusts an application layer parameter based on an end-to-end link characteristic parameter, the C-DRX, and a radio link configuration.

Based on the AF/AS measuring and predicting the link characteristic between the AF/AS and the UPF, combined with data sent from the RAN side and the core network side, the end-to-end network transmission characteristic from the AF to the UE may be grasped, and the application layer parameter may be adjusted based on the C-DRX and the radio link configuration, so that adjustment and adaptation of the application layer may be consistent with the network side, which may optimize the QoS.

S807: Perform end-to-end detection on a QoS indicator and a power saving parameter, and trigger the AF/AS to adjust the application layer parameter in time if the QoS indicator and the power saving parameter do not satisfy a condition.

A process of triggering the AF/AS to adjust the application layer parameter may be repeated for a plurality of times until the end-to-end detection performed on the QoS indicator and the power saving parameter satisfy the condition based on the application side parameter being re-adjusted.

In the foregoing embodiments of the disclosure, the RAN side may report the network status parameter of the radio access network side to the AF/AS. The core network side may associate network transmission characteristics per-UE and send the associated network transmission characteristics to the AF/AS. In addition, the AF/AS may measure and predict a link characteristic between the AF/AS and the UPF, so that an end-to-end network transmission characteristic from the AF to the UE is grasped. Parameters that affect the rate such as the frame rate and the resolution of the service data packet may be adjusted to implement flexible adaptation of the service data packet and the network status, which may optimize the QoS.

The following describes an apparatus according to some embodiments of the disclosure, which may be used to implement the data transmission method in the foregoing embodiments of the disclosure. For details not disclosed in the apparatus embodiments of the disclosure, refer to the embodiments of the foregoing data transmission method of the disclosure.

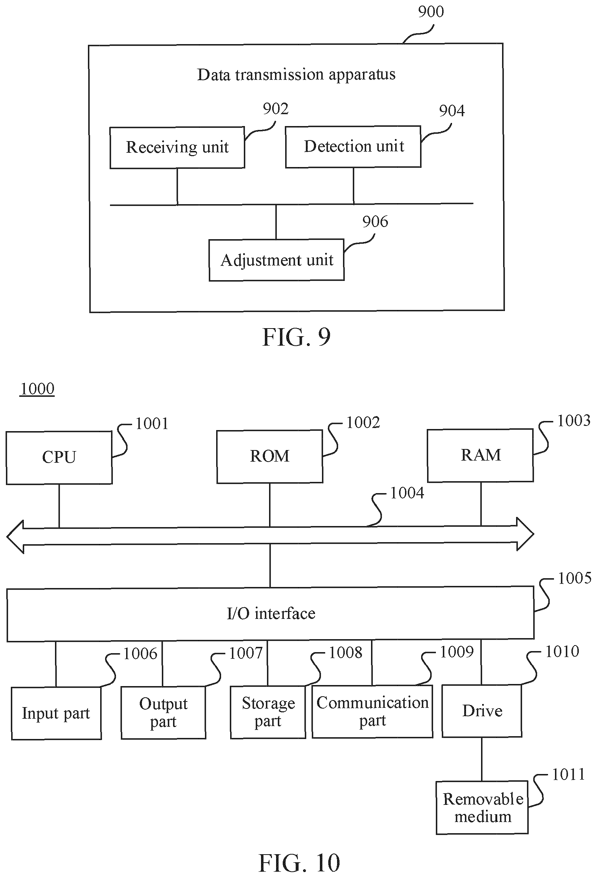

FIG. 9 is a block diagram of a data transmission apparatus according to some embodiments of the disclosure. The data transmission apparatus may be disposed in an application layer network element, for example, may be disposed in an AF.

Referring to FIG. 9, a data transmission apparatus 900 according to some embodiments of the disclosure includes: a receiving unit 902, a detection unit 904, and an adjustment unit 906.

The receiving unit 902 may be configured to receive network status information on a radio access network side reported by an access network element, and receive a network transmission characteristic between the access network element and a core network gateway sent by a core network element. The detection unit 904 may be configured to detect a network transmission characteristic between an application server and the core network gateway. The adjustment unit 906 may be configured to adjust a parameter of a to-be-transmitted service data packet based on the network status information on the radio access network side, the network transmission characteristic between the access network element and the core network gateway 906 the network transmission characteristic between the application server and the core network gateway.

In some embodiments of the disclosure, based on the foregoing solutions, the network status information on the radio access network side includes at least one of the following: a scheduling transmission policy adopted for a cyclical service data packet, an application layer service condition of user equipment, or a network status in a serving cell in which the user equipment is located.

In some embodiments of the disclosure, based on the foregoing solutions, the scheduling transmission policy includes a connected-discontinuous reception (C-DRX) configuration parameter, the C-DRX configuration parameter including at least one of the following: a C-DRX cycle, or activation duration and sleep duration included in a single C-DRX cycle.

In some embodiments of the disclosure, based on the foregoing solutions, the parameter of the to-be-transmitted service data packet includes a cycle of the service data packet; and the adjusting a parameter of a to-be-transmitted service data packet includes: adjusting the cycle of the to-be-transmitted service data packet to an integer multiple of the C-DRX cycle.

In some embodiments of the disclosure, based on the foregoing solutions, the application layer service condition of the user equipment includes at least one of the following: information about an application running on the user equipment that is to be sensed by an application server, or information about an application running on the user equipment that may not be sensed by the application server.

In some embodiments of the disclosure, the network status in the serving cell in which the user equipment is located includes at least one of the following: a radio link status in the serving cell, occupation of a time-frequency resource in the serving cell, or load information of the serving cell.

In some embodiments of the disclosure, based on the foregoing solutions, the receiving unit may be configured to: receive a network transmission characteristic between a base station device and a user plane function for each user equipment sent by the core network element, the network transmission characteristic between the base station device and the user plane function for each user equipment being determined by the core network element based on a transmission link between the base station device and the user plane function, based on a transmission link between a plurality of user plane functions for data forwarding, and a protocol data unit (PDU) session and a quality of service flow established for each user equipment.

In some embodiments of the disclosure, based on the foregoing solutions, the detection unit may be configured to: dynamically detect a transmission link between the application server and the core network gateway; and determine the network transmission characteristic between the application server and the core network gateway based on a dynamic detection result of the transmission link.

In some embodiments of the disclosure, based on the foregoing solutions, the network transmission characteristic between the application server and the core network gateway includes: an impact of the transmission link between the application server and the core network gateway on cycle information and a delay jitter distribution characteristic of the transmitted service data packet.

In some embodiments of the disclosure, based on the foregoing solutions, the parameter of the to-be-transmitted service data packet includes at least one of the following: a frame rate of the service data packet, resolution of the service data packet, or a cycle of the service data packet.

In some embodiments of the disclosure, based on the foregoing solutions, the detection unit is further configured to: detect, based on the parameter of the to-be-transmitted service data packet being adjusted, whether the service data packet transmitted between the application server and the access network element satisfies a quality of service condition during transmission; and the adjustment unit is further configured to: re-adjust the parameter of the to-be-transmitted service data packet based on the network status information on the radio access network side, the network transmission characteristic between the access network element and the core network gateway, and the network transmission characteristic between the application server and the core network gateway if the service data packet transmitted between the application server and the access network element may not satisfy the quality of service condition during the transmission; and perform data transmission based on the re-adjusted parameter of the service data packet.

FIG. 10 is a schematic structural diagram of a computer system adapted to implement an electronic device according to some embodiments of the disclosure.

The computer system 1000 of the electronic device shown in FIG. 10 is an example, and may not constitute any limitation on functions and use ranges of the embodiments of the disclosure.

As shown in FIG. 10, the computer system 1000 includes a central processing unit (CPU) 1001, which may perform various actions and processing based on a program stored in a read-only memory (ROM) 1002 or a program loaded from a storage part 1008 into a random access memory (RAM) 1003, for example, perform the method described in the foregoing embodiments. The RAM 1003 further stores various programs and data used for system operations. The CPU 1001, the ROM 1002, and the RAM 1003 are connected to each other through a bus 1004. An input/output (I/O) interface 1005 is also connected to the bus 1004.

The following components are connected to the I/O interface 1005: an input part 1006 including a keyboard and a mouse, or the like; an output part 1007 including a cathode ray tube (CRT), a liquid crystal display (LCD), a speaker, or the like; a storage part 1008 including hard disk, or the like; and a communication part 1009 including a network interface card such as a local area network (LAN) card, a modem, or the like. The communication part 1009 performs communication processing by using a network such as the Internet. A drive 1010 is also connected to the I/O interface 1005. A removable medium 1011, such as a magnetic disk, an optical disc, a magneto-optical disk, or a semiconductor memory, may be mounted on the driver 1010, so that a computer program read from the removable medium is installed into the storage part 1008.

According to some embodiments of the disclosure, the processes described above by referring to the flowcharts may be implemented as computer software programs. For example, some embodiments of the disclosure include a computer program product. The computer program product includes a computer program stored in a computer-readable medium. The computer program includes a computer program used for performing a method shown in the flowchart. In such embodiments, the computer program may be downloaded and installed through the communication part 1009 from a network, and/or installed from the removable medium 1011. When the computer program is executed by the CPU 1001, the various functions defined in the system of the disclosure are executed.

The computer-readable medium shown in the embodiments of the disclosure may be a computer-readable signal medium or a computer-readable storage medium or any combination of two. The computer-readable storage medium may be, for example, but is not limited to, an electrical, magnetic, optical, electromagnetic, infrared, or semiconductor system, apparatus, or device, or any combination thereof. A more detailed example of the computer-readable storage medium may include but is not limited to: An electrical connection having one or more wires, a portable computer magnetic disk, a hard disk, a random access memory (RAM), a read-only memory (ROM), an erasable programmable read-only memory (EPROM), a flash memory, an optical fiber, a compact disk read-only memory (CD-ROM), an optical storage device, a magnetic storage device, or any appropriate combination thereof. In the disclosure, the computer-readable storage medium may be any tangible medium containing or storing a program, and the program may be used by or used in combination with an instruction execution system, an apparatus, or a device. In the disclosure, a computer-readable signal medium may include a data signal in a baseband or propagated as a part of a carrier wave, the data signal carrying a computer-readable computer program. A data signal propagated in such a way may assume a plurality of forms, including, but not limited to, an electromagnetic signal, an optical signal, or any appropriate combination thereof. The computer-readable signal medium may be further any computer-readable medium in addition to a computer-readable storage medium. The computer-readable medium may send, propagate, or transmit a program that is used by or used in combination with an instruction execution system, apparatus, or device. The computer program included in the computer-readable storage medium may be transmitted using a suitable medium, including but not limited to: a wireless medium, a wire medium, or the like, or a suitable combination thereof.

The flowcharts and block diagrams in the accompanying drawings illustrate system architectures, functions, and operations that may be implemented by a system, a method, and a computer program product according to various embodiments of the disclosure. Each box in a flowchart or a block diagram may represent a module, a program segment, or a part of code. The module, the program segment, or the part of code includes one or more executable instructions used for implementing designated logic functions. In some implementations used as substitutes, functions annotated in boxes may occur in a sequence different from that annotated in an accompanying drawing. For example, two boxes shown in succession may be performed basically in parallel, and sometimes the two boxes may be performed in a reverse sequence. This is determined by a related function. Each box in a block diagram and/or a flowchart and a combination of boxes in the block diagram and/or the flowchart may be implemented by using a dedicated hardware-based system configured to perform a specified function or operation, or may be implemented by using a combination of dedicated hardware and a computer program.

Related units described in some embodiments of the disclosure may be implemented in a software manner, or may be implemented in a hardware manner, and the unit described may also be set in a processor. Names of the units may not constitute a limitation on the units in a specific case.

In another aspect, the disclosure further provides a computer readable medium. The computer readable medium may be included in the electronic device described in the above embodiments, or may exist alone without being assembled into the electronic device. The foregoing computer-readable medium carries one or more computer programs, the one or more computer programs, when executed by the electronic device, causing the electronic device to implement the method described in the foregoing embodiments.

Although a plurality of modules or units of a device configured to perform actions are described in the foregoing detailed description, such division is not mandatory. Actually, according to the implementations of the disclosure, the features and functions of two or more modules or units described above may be specified in one module or unit. Conversely, features and functions of one module or unit described above may be further divided into a plurality of modules or units for implementation.

Through the descriptions of the foregoing implementations, a person of ordinary skill in the art understands that the exemplary implementations described herein may be implemented through software, or may be implemented through software located in combination with necessary hardware. Therefore, the technical solutions of the embodiments of the disclosure may be implemented in a form of a software product. The software product may be stored in a non-volatile storage medium (which may be a CD-ROM, a USB flash drive, a removable hard disk, or the like) or on the network, including several instructions for instructing a computing device (which may be a personal computer, a server, a touch terminal, a network device, or the like) to perform the methods according to the embodiments of the disclosure.

After considering the specification and practicing the disclosed embodiments, a person skilled in the art may easily conceive of other implementations of the disclosure. The disclosure is intended to cover any variations, uses or adaptive changes of the disclosure. Such variations, uses or adaptive changes follow the general principles of the disclosure, and include well-known knowledge and conventional technical means in the art that are not disclosed in the disclosure.

It is to be understood that the disclosure is not limited to the precise structures described above and shown in the accompanying drawings, and various modifications and changes can be made without departing from the scope of the disclosure. The scope of the disclosure is limited by the appended claims only.

## Claims

1. A data transmission method, **characterized by** comprising:
receiving network status information on a radio access network side reported by an access network element;
receiving a network transmission characteristic between the access network element and a core network gateway sent by a core network element;
detecting a network transmission characteristic between an application server and the core network gateway; and
adjusting a parameter of a service data packet to be transmitted based on the network status information, the network transmission characteristic between the access network element and the core network gateway, and the network transmission characteristic between the application server and the core network gateway.

2. The data transmission method according to claim 1, **characterized in that** the network status information includes at least one of:
a scheduling transmission policy adopted for a cyclical service data packet, an application layer service condition of user equipment, or a network status in a serving cell in which the user equipment is located.

3. The data transmission method according to claim 2, **characterized in that** the scheduling transmission policy includes a connected-discontinuous reception (C-DRX) configuration parameter, and
wherein the C-DRX configuration parameter includes at least one of: a C-DRX cycle, or activation duration and sleep duration included in a single C-DRX cycle.

4. The data transmission method according to claim 3, **characterized in that** the parameter of the service data packet to be transmitted includes a cycle of the service data packet; and
wherein the adjusting the parameter of the service data packet to be transmitted includes:
adjusting the cycle of the service data packet to be transmitted to an integer multiple of the C-DRX cycle.

5. The data transmission method according to claim 2, **characterized in that** the application layer service condition of the user equipment includes at least one of:
information about an application running on the user equipment that is to be sensed by the application server, or information about an application running on the user equipment that is not to be sensed by the application server.

6. The data transmission method according to claim 2, **characterized in that** the network status in the serving cell in which the user equipment is located includes at least one of:
a radio link status in the serving cell, occupation of a time-frequency resource in the serving cell, or load information of the serving cell.

7. The data transmission method according to claim 1, **characterized in that** the receiving a network transmission characteristic between the access network element and a core network gateway sent by a core network element comprises:
receiving a network transmission characteristic between a base station device and a user plane function for each user equipment sent by the core network element, and
wherein the network transmission characteristic between the base station device and the user plane function for each user equipment is determined by the core network element based on a transmission link between the base station device and the user plane function, a transmission link between a plurality of user plane functions for data forwarding, and a protocol data unit (PDU) session and a quality of service flow established for each user equipment.

8. The data transmission method according to claim 1, **characterized in that** the detecting a network transmission characteristic between an application server and the core network gateway comprises:
dynamically detecting a transmission link between the application server and the core network gateway; and
determining the network transmission characteristic between the application server and the core network gateway based on a dynamic detection result of the transmission link.

9. The data transmission method according to claim 8, **characterized in that** the network transmission characteristic between the application server and the core network gateway includes:
an impact of the transmission link between the application server and the core network gateway on cycle information and a delay jitter distribution characteristic of the service data packet that is transmitted.

10. The data transmission method according to claim 1, **characterized in that** the parameter of the service data packet to be transmitted includes at least one of: a frame rate of the service data packet, resolution of the service data packet, or a cycle of the service data packet.

11. The data transmission method according to any one of claims 1 to 10, **characterized in that** after the adjusting a parameter of a service data packet to be transmitted, the method further comprises:
detecting whether the service data packet transmitted between the application server and the access network element satisfies a quality of service condition during transmission;
re-adjusting the parameter of the service data packet to be transmitted based on the network status information on the radio access network side, the network transmission characteristic between the access network element and the core network gateway, and the network transmission characteristic between the application server and the core network gateway if the service data packet transmitted between the application server and the access network element does not satisfy the quality of service condition during the transmission; and
performing data transmission based on the re-adjusted parameter of the service data packet.

12. A data transmission apparatus, **characterized by** comprising:
a receiving unit, configured to receive network status information on a radio access network side reported by an access network element, and receive a network transmission characteristic between the access network element and a core network gateway sent by a core network element;
a detection unit, configured to detect a network transmission characteristic between an application server and the core network gateway; and
an adjustment unit, configured to adjust a parameter of a service data packet to be transmitted based on the network status information, the network transmission characteristic between the access network element and the core network gateway, and the network transmission characteristic between the application server and the core network gateway.

13. A computer-readable medium, having a computer program stored therein, wherein when the computer program is executed by a processor, the data transmission method according to any of claims 1 to 11 is implemented.

14. An electronic device, comprising:
one or more processors; and
a memory, configured to store one or more computer programs, the one or more computer programs, when executed by one or more programs, causing the electronic device to implement the data transmission method according to any one of claims 1 to 11.

15. A computer program product, the computer program product comprising computer program, the computer program being stored in a computer-readable storage medium, a processor of an electronic device reading the computer program from the computer-readable storage medium, and the processor executing the computer program to cause the electronic device to implement the data transmission method according to any one of claims 1 to 11.
